# EUROPÄISCHE PATENTANMELDUNG

(11) **EP 1 014 548 A2**
(43) Veröffentlichungstag der Anmeldung: **28.06.2000**
(21) Anmeldenummer: 99124588.7
(22) Anmeldetag: 09.12.1999
(51) Int. Cl.: H02M 3/158

(54) **Verfahren und Vorrichtung zur Symmetrierung der Stromaufteilung**

(30) Priorität: 15.12.1998 AT 209098
(71) Anmelder: High Tech Drives Antriebsforschungs- und Entwicklungs- GmbH, 7000 Eisenstadt (AT)
(72) Erfinder: Drofenik, Uwe, Dipl.-Ing. Dr., 2372 Giesshübl (AT)
(74) Vertreter: Krause, Peter

(57) **Zusammenfassung**

Die Erfindung betrifft ein Verfahren und eine Vorrichtung zur Symmetrierung der Ströme zweier paralleler Hochsetzsteller mittels Variation der um 180° phasenverschobenen Stromregler-Trägersignale.

Es werden die Ströme in den Teilsystemen voneinander subtrahiert und integriert, so daß sich ein integrales Differenzsignal ergibt. Zwecks Symmetrierung wird dieses Signal zum Gleichanteil des einen Trägersignals dazuaddiert, und vom Gleichanteil des anderen 180° phasenverschobenen Stromregler-Trägersignals subtrahiert. Die resultierenden Stromregler-Trägersignale der beiden Teilsysteme werden mit dem Stromregelfehler des Summenstromes beider Teilsysteme verglichen, woraus die Schaltbefehle für die Schalter der beiden Hochsetzsteller abgeleitet werden. Auftretende Asymmetrien der Stromaufteilung bewirken ein Ansteigen des Gleichanteils des einen Trägersignals bei gleichzeitigem Absenken des Gleichanteils des anderen Trägersignals, wodurch die Einschaltdauer der beiden Schalter derart beeinflußt wird, daß der Asymmetrie der Stromaufteilung entgegengewirkt wird.

## Beschreibung

Die Erfindung betrifft ein Verfahren und eine Vorrichtung zur Symmetrierung der Stromaufteilung zweier parallel geschalteter Hochsetzsteller mittels Variation der um 180° phasenverschobenen Stromregler-Trägersignale.

Beim Gleichrichten im einphasigen Netz werden Hochsetzsteller verwendet, deren Stromregelung mittels Pulsbreitenmodulation erfolgt. Das Parallelschalten zweier solcher Hochsetzsteller führt zu einer Reduktion der Baugröße der Gesamtinduktivität auf eine Viertel verglichen mit einem einfachen Hochsetzsteller gleicher Leistung und zu einer reduzierten Strombelastung der Ausgangskapazität, wenn die Stromregler-Trägersignale der beiden Teilsysteme eine Phasenverschiebung um 180° aufweisen. Die Aufteilung des Gesamtstromes auf die beiden Teilsysteme ist sehr sensitiv auf Bauteiltoleranzen, ohne eine geeignete Symmetrierungs-Regelung übernimmt eines der beiden Teilsystem den gesamten Strom.

Nach dem Stand der Technik erfolgt die Symmetrierung der Ströme in den Teilsystemen derart, daß die Ströme in den Induktivitäten der beiden Hochsetzsteller potentialfrei gemessen werden, das Differenzsignal der gemessenen Ströme dient einem Regler zur aktiven Symmetrierung der Stromaufteilung in den beiden Teilsystemen. Problematisch ist die Notwendigkeit der potentialfreien Strommessung, die hohe Kosten auf Seite der Regelelektronik verursacht.

Aufgabe der Erfindung ist es daher, unter Vermeidung einer aufwendigen potentialfreien Strommessung eine kostengünstige Regelung zu schaffen, die eine Symmetrierung der Stromaufteilung in den beiden parallelgeschalteten Hochsetzstellern sicherstellt.

Das wird erfindungsgemäß durch das im Kennzeichenteil des **Patentanspruches 1** beschriebene Verfahren erreicht.

Das erfindungsgemäße Verfahren zur Symmetrierung der Ströme geht aus von der Kenntnis der augenblicklichen Stromwerte in den Leistungsschaltern der beiden Hochsetzsteller. Der Strom im Leistungsschalter ist ein anderer als der zu regelnde Strom durch die Induktivität, wird aber im Rahmen des Verfahrens sinnvoll zur Symmetrierung der Ströme in den beiden Teilsystemen verwendet. Hierbei wird der Strom durch den Leistungsschalter des einen Teilsystems von dem des anderen Teilsystems subtrahiert, diese Differenz wird integriert. Das so erhaltene Signal ist ungleich Null, wenn eines der beiden Teilsysteme mehr Strom führt als das andere. Dieses integrierte Differenzsignal wird als Offset zum Gleichanteil des Trägersignals des einen Teilsystems dazuaddiert, und vom Gleichanteil des um 180° phasenverschobenen Trägersignals des anderen Teilsystems subtrahiert. Die Einschaltdauer der Leistungsschalter ergibt sich als die Pulsbreite, die entsteht, wenn das zugehörige Trägersignal mit den Stromfehler verschnitten wird. Wird zum Trägersignal ein positives Offsetsignal dazuaddiert, dann wird der Gleichanteil des Trägersignals gehoben, und die sich durch Verschneidung ergebenden Pulsbreite wird größer, der Strom steigt. Subtraktion des Offsetsignals senkt den Gleichanteil des Trägersignals, und die Pulsbreite und somit die Einschaltdauer und der Strom werden kleiner. Wenn ein Teilsystem größeren Strom führt als den halben Gesamtstrom, dann wird das integrierte Differenzsignal kleiner Null, der Offset des betrachteten Teilsystems sinkt, und der Strom in diesem Teilsystem sinkt ebenfalls.

Eine insbesondere hinsichtlich Realisierungsaufwand vorteilhafte elektronische Schaltung zur praktischen Realisierung des erfindungsgemäßen Verfahrens nach Anspruch 1 beschreibt der Anspruch 2.

Hierbei werden die Ströme durch die Leistungsschalter der beiden Hochsetzsteller mittels Shuntwiderständen ohne Potentialtrennung gemessen, diese Spannungssignale werden an den Eingang eines Subtrahierverstärkers gelegt, der mittels einer Präzisionsspannungsquelle am Eingang derart eingestellt ist, daß bei integriertem Stromdifferenzsignal Null der Ausgang des Subtrahierverstärkers auf doppeltem Spannungsniveau des Gleichanteils des Trägersignals der beiden Phasen liegt.

Das Trägersignal für die Pulsbreitenmodulation des einen Hochsetzstellers wird mit einem positiv rückgekoppelten Komparator erzeugt, in dessen Rückkopplungsnetzwerk der die Frequenz des Trägersignals bestimmende Kondensator liegt. Der maximale Ausgangsspannungswert dieses Komperators ist der Ausgangsspannungswert des Subtrahierverstärkers. Der Strom durch den Kondensator im Rückkopplungsnetzwerk ist konstant, der Wechselanteil der Spannung am Kondensator ist in erster Näherung dreieckförmig. Die Spannung am Verbindungspunkt zwischen Komparatoreingang und Kondensator ist das Trägersignal des einen pulsbreitenmodulierten Hochsetzstellers. Der Gleichanteil dieses Trägersignals ist durch das Rückkopplungsnetzwerk des Komparators so eingestellt, daß er gleich der halben maximalen Ausgangsspannung des Komparators ist.

Durch einen invertierenden Verstärker wird der Wechselanteil des so generierten Trägersignals des ersten Hochsetzstellers um 180° phasenverschoben. Das Nullniveau des invertierenden Verstärkers ist genau halb so groß festgelegt wie die Spannung an der Präzisionsspannungsquelle, und somit gleich groß wie der Gleichanteil des Trägersignals des ersten Hochsetzstellers bei symmetrischer Stromaufteilung. Die Invertierung des eingangsseitig anliegenden Trägersignals bewirkt, daß der Gleichanteil des ausgangsseitigen Trägersignals genau um den Gleichanteil über der halben Präzisionsspannung liegt, um die der Gleichanteil des eingangsseitigen Trägersignals unter der halben Präzisionsspannung liegt.

Die beiden Trägersignale werden jeweils mittels Komparatoren mit dem Stromfehler verglichen, die Ausgänge der Komparatoren liefern direkt Schaltsignale für die Leistungsschalter der beiden Hochsetzsteller, eine Potentialtrennung ist nicht erforderlich. Der Stromfehler ist für beide Teilsysteme gleich, und wird von einem überlagerten PI-Regler generiert, an dessen Eingang der Sollstrom des Gesamtsystems mit dem Iststrom des Gesamtsystems verglichen werden. Der Iststrom wird ebenfalls ohne Potentialtrennung mit einem Shuntwiderstand einfach und billig gemessen.

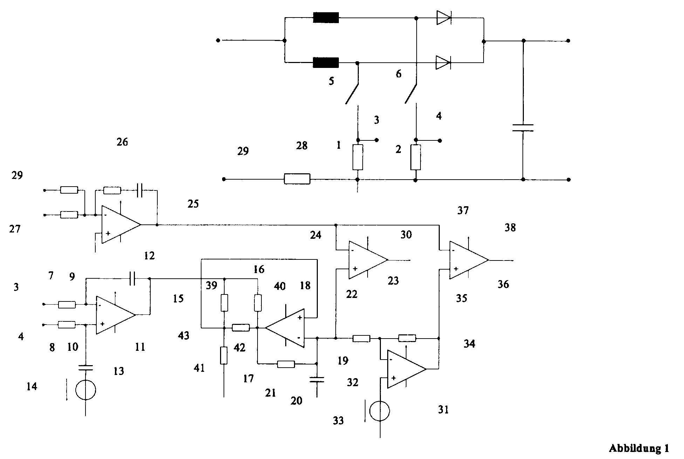

Die Erfindung wird in folgenden anhand einer Zeichnung näher erläutert. Die Abbildung 1 zeigt eine vorteilhafte zur Realisierung des erfindungsgemäßen Verfahrens einzusetzende elektronische Schaltung nach Anspruch 2.

In den Shuntwiderständen 1 und 2 werden die Stromsignale 3 und 4 der Ströme durch die Leistungsschalter 5 und 6 der beiden parallelgeschalteten Hochsetzsteller potentialfrei gemessen, und über die Widerstände 7 und 8 an die Eingänge 9 und 10 des Operationsverstärkers 11 gelegt. Der Verstärker 11 ist durch den Kondensator 12 in der negativen Rückkopplung ein integrierender Subtrahierverstärker, wobei der positive Eingang 10 über einen Kondensator 13 an einer Spannungsquelle 14 hängt.

Der Verstärkerausgang 15 ist über ein Widerstandsnetzwerk 16 an den Ausgang 17 des Komparators 18 gebunden, dessen negativer Eingang 19 über einen schaltfrequenzbestim-menden Kondensator 20 an Masse gelegt ist, und über einen schaltfrequenzbestimmenden Widerstand 21 rückgekoppelt ist. Das Widerstandsnetzwerk 16 besteht aus dem Widerstand 39, der am Ausgang 15 des Subtrahierverstärkers und am positiven Eingang 43 des Komparators 18 liegt, weiters einem Widerstand 40, der den Ausgang 15 des Subtrahierverstärkers mit dem Ausgang 17 des Komparators 18 verbindet, einem Widerstand 42, der den Komparatorausgang 17 mit dem postiven Komparatoreingang 43 verbindet, und dem Widerstand 41, der den positiven Komparatoreingang 43 auf Masse legt.

Das Spannungssignal 19 wird an den positiven Eingang 22 eines Komparators 23 gelegt, an dessen negativem Eingang 24 das Ausgangssignal 25 des Pl-Reglers 26 anliegt, der den Stromfehler aus vorgegebenem Sollstrom 27 und mittels Shuntwiderstandes 28 gemessenem Ist-Gesamtstrom 29 der beiden parallelen Hochsetzsteller bildet. Der Ausgang 30 des Komparators 23 steuert den Leistungsschalter 5 des einen Teilsystems an.
Das Spannungssignal 19 wird weiters über einen invertierenden Verstärker 31 geführt, an dessen positiven Eingang 32 eine Spannungsquelle 33 liegt, die genau die halbe Spannung wie die Spannungsquelle 14 hat. Der Ausgang 34 des invertierenden Verstärkers liegt am positiven Eingang 35 des Komparators 36, dessen negativer Eingang 37 am Ausgang 25 des PI-Reglers 26 liegt. Der Ausgang 38 des Komparators 36 steuert direkt den Leistungsschalter 6 des anderen Teilsystems an.

Die in den Shuntwiderständen 1 und 2 gemessenen Ströme 3 und 4 werden einem integrierenden Subtrahierverstärker zugeführt, dessen Integrationszeitkonstante durch die Kondensatoren 12 und 13 in Verbindung mit den Widerständen 7 und 8 definiert ist. Am positiven Eingang 10 des Verstärkers 11 liegt über den Kondensator 13 eine eingeprägte Spannung 14. Wenn die Ströme 3 und 4 in den parallelgeschalteten Teilsystemen gleich groß sind, dann liegt am zwischen den Eingängen 9 und 10 des Subtrahierverstärkers die Spannung Null, der Ausgang 15 des Subtrahierverstärkers ist gleich der von der Spannungsquelle 14 vorgegebenen Spannung. Wenn ein Teilsystem mehr als den halben Summenstrom führt, dann ist die Differenz zwischen 3 und 4 ungleich Null, die Spannung am Ausgang 15 ist entsprechend größer oder kleiner als die Spannung der Quelle 14.

Der positiv rückgekoppelte Komparator 18 bildet in Verbindung mit dem Widerstandsnetzwerk 16, dem Widerstand 21 und dem Kondensator 20 einen Oszillator, dessen Frequenz durch den Widerstand 21 bzw. durch die Kapazität 20 eingestellt wird. Durch das Widerstandsnetzwerk 16 ist der Gleichanteil der Spannung im Punkt 19 gleich der Hälfte der Spannung 15. Der Wechselanteil des Potentialverlaufes an 19 ist näherungsweise ein dreieckförmiges Signal, dessen Frequenz mittels der Kapazität 20 und dem Widerstand 21 eingestellt werden kann. Das Signal in 19 ist das Trägerignal der Pulsbreitenmodulation des einen Teilsystems. Es wird mit dem Stromfehler 25, der sich aus einem Vergleich des Sollstromes 27 mit dem Iststrom 29 ergibt, mittels des Komparators 23 verglichen, an dessen Ausgang 30 das Schaltsignal für den einen der beiden Leistungsschalter 5 generiert wird. Wenn der Strom 3 größer als der halbe Summenstrom 29 wird, dann ist das Differenzssignal zwischen 3 und 4 negativ, die Spannung am Ausgang 15 des Subtrahierverstärkers ist kleiner als die durch die Quelle 14 eingeprägte Spannung. Der Gleichanteil des Signals 19 ist somit ebenfalls kleiner als im Falle von Symmetrie, die am Ausgang 30 des Komparators 23 generierten Einschaltzeiten des Leistungsschalters 5 werden kleiner, der Strom durch den Leistungsschalter nimmt wieder ab.

Das Trägersignal 34 für den Leitungschalter 6 des anderen Teilsystems wird durch eine Invertierung des Trägersignals 19 mittels Invertierverstärkers 31 gebildet. Durch die Invertierung kommt es zu einer Phasenverschiebung des Trägersignals um 180°, wodurch der Netzstromrippel vorteilhaft reduziert wird. Da am positiven Eingang 32 des Invertierverstärkers 31 eine Spannungsquelle 33 hängt, die genau die halbe Spannung der Quelle 14 vorgibt, ist der Gleichanteil des Ausgangssignals 34 genau gleich dem Gleichanteil des Eingangssignals 19, wenn dieses ebenfalls den Spannungswert der Quelle 33 hat. Das ist nur dann erreicht, wenn das Differenzsignal zwischen 3 und 4 Null ist. Wenn aufgrund asymmertrischer Stromaufteilung in den Teilsystemen der Gleichanteil des Signals 19 z.B. kleiner als im Fall von Symmetrie ist, dann ist das um die Quelle 33 invertierte Signal 34 um den selben Wert größer als im Fall von Symmetrie. Das Trägersignal 34 wird einem Komparator 36 zugeführt, der es mit dem Stromfehler 25 vergleicht, wodurch der Schaltbefehl am Ausgang 38 für den Leistungsschalter 6 gebildet wird.

Somit bewirkt eine Asymetrie der Stromverteilung in den Teilsystemen bei einem Trägersignal 19 ein Ansteigen des Gleichanteils und beim 180° phasenverschobenen Trägersignal 34 ein Absenken des Gleichanteils, oder umgekehrt. In beiden Teilsystemen wird dadurch der asymmtrischen Stromaufteilung aktiv entgegengewirkt.

## Patentansprüche

1. Verfahren zur Symmetrierung der Stromaufteilung zweier parallel geschalteter Hochsetzsteller, deren Stromregelung mittels Pulsbreitenmodulation erfolgt, bei der die dreieckförmigen, hochfrequenten Stromregler-Trägersignale der beiden Teilsysteme gegeneinander um 180° phasenverschoben sind, **dadurch gekennzeichnet, daß** die z.B. mittels Shuntwiderständen in den Leistungsschaltern der Teilsysteme gemessenen Ströme voneinander subtrahiert und integriert werden, wobei diese integrierte Differenz anschließend zu einem vorgegebenen Gleichanteil und zu einem hochfrequenten dreieckförmigen Wechselanteil dazuaddiert wird, sodaß sich ein Stromregler-Trägersignal ergibt, das mit dem Stromregelfehler verschnitten die Ansteuersignale für den Leistungsschalter des einen Teilsystems ergibt, und wobei gleichzeitig diese integrierte Differenz zwecks Schaffung des Trägersignals für die Pulsbreitenmodulation des anderen Teilsystems zuerst negiert wird, dann zum vorgegebenen Gleichanteil dazuaddiert wird, womit sich ein Wert ergibt, von dem schließlich der hochfrequente dreieckförmige Wechselanteil subtrahiert wird, sodaß sich ein Trägersignal ergibt, das mit dem Stromregelfehler verschnitten die Ansteuersignale für den Leistungsschalter des anderen Teilsystems bestimmt.

2. Vorrichtung zur Symmetrierung der Stromaufteilung zweier parallel geschalteter Hochsetzsteller, deren Stromregelung mittels Pulsbreitenmodulation erfolgt, bei der die dreieckförmigen, hochfrequenten Stromregler-Trägersignale der beiden Teilsysteme gegeneinander um 180° phasenverschoben sind, **dadurch gekennzeichnet, daß** die in den Shuntwiderständen (1) und (2) ohne Potentialtrennung gemessenen Stromsignale (3) und (4) der Ströme durch die Leistungsschalter (5) und (6) der beiden parallelgeschalteten Hochsetzsteller über die Widerstände (7) und (8) an die Eingänge (9) und (10) des Operationsverstärkers (11) gelegt werden, wobei der Verstärker (11) durch den Kondensator (12) in der negativen Rückkopplung ein integrierender Subtrahierverstärker ist, und der positive Eingang (10) über einen Kondensator (13) an einer Spannungsquelle (14) hängt, und weiters der Verstärkerausgang (15) über ein Widerstandsnetzwerk (16), bestehend aus dem Widerstand (39), der am Ausgang (15) des Subtrahierverstärkers und am positiven Eingang (43) des Komparators (18) liegt, einem Widerstand (40), der den Ausgang (15) des Subtrahierverstärkers mit dem Ausgang (17) des Komparators (18) verbindet, einem Widerstand (42), der den Komparatorausgang (17) mit dem postiven Komparatoreingang (43) verbindet, und dem Widerstand (41), der den positiven Komparatoreingang (43) auf Masse legt, an den Ausgang (17) des Komparators (18) gelegt ist, dessen negativer Eingang (19) über einen schaltfrequenzbestimmenden Kondensator (20) an Masse gelegt und über einen schaltfrequenzbestimmenden Widerstand (21) rückgekoppelt ist. wobei das Spannungssignal (19) an den positiven Eingang (22) eines Komparators (23) gelegt wird, an dessen negativem Eingang (24) das Ausgangssignal (25) des PI-Reglers (26) anliegt, der den Stromfehler aus vorgegebenem Sollstrom (27) und mittels Shuntwiderstandes (28) gemessenem Ist-Gesamtstrom (29) der beiden parallelen Hochsetzsteller bildet, wodurch sich am Ausgang (30) des Komparators (23) ein Ansteuersignal für den Leistungsschalter (5) des einen Teilsystems ergibt, und weiters das Spannungssignal (19) über einen invertierenden Verstärker (31) geführt wird, an dessen positiven Eingang (32) eine Spannungsquelle (33) liegt, die genau die halbe Spannung wie die Spannungsquelle (14) hat, wobei der Ausgang (34) des invertierenden Verstärkers am positiven Eingang (35) des Komparators (36) liegt, dessen negativer Eingang (37) am Ausgang (25) des PI-Reglers (26) liegt und der Ausgang (38) des Komparators (36) den Leistungsschalter (6) des anderen Teilsystems direkt ansteuert.
